# EUROPEAN PATENT APPLICATION

(11) **EP 4 707 236 A1**
(43) Date of publication of application: **11.03.2026**
(21) Application number: 24836278.2
(22) Date of filing: 01.07.2024
(51) Int. Cl.: C01B 32/174, H01M 4/62, H01M 10/052

(54) **CARBON NANOTUBE DISPERSION AND PREPARATION METHOD THEREFOR**

(30) Priority: 03.07.2023 KR 20230085868
(71) Applicant: LG Chem, Ltd., Seoul 07336 (KR)
(72) Inventor: WOO, Yu Jin, Daejeon 34122 (KR); JANG, Young Jin, Daejeon 34122 (KR); JUN, Jae Moon, Daejeon 34122 (KR); CHOE, Jun Ho, Daejeon 34122 (KR); YOON, Ki Youl, Daejeon 34122 (KR)
(74) Representative: Hoffmann Eitle
(86) International application number: PCT/KR2024/009235
(87) International publication number: WO 2025/009830

(57) **Abstract**

The present invention relates to a carbon nanotube dispersion exhibiting low viscosity and little change in viscosity over time, which includes carbon nanotubes, a dispersant, and a dispersion medium, wherein the dispersant contains a first dispersant and a second dispersant in a weight ratio of 100:10 to 90, the first dispersant is a dispersant containing an N atom, the second dispersant is a compound containing a sulfonic group, a hydroxyl group, and an aromatic ring in a molecular structure, and the carbon nanotubes and the dispersant are present in a weight ratio of 100:25 to 500.

## Description

### TECHNICAL FIELD

### Cross-reference to Related Applications

This application claims the benefit of Korean Patent Application No. 10-2023-0085868, filed on July 3, 2023, in the Korean Intellectual Property Office, the disclosure of which is incorporated herein in its entirety by reference.

### Technical Field

The present invention relates to a carbon nanotube dispersion and a method for preparing the same, and more particularly, to a carbon nanotube dispersion exhibiting low viscosity and little change in viscosity over time, and a method for preparing the same.

### BACKGROUND ART

Demand for secondary batteries as an energy source is on a rapid rise, resulting from technology development and a growing demand for mobile devices. Among such secondary batteries, lithium secondary batteries having high energy density and voltage, long cycle life, and low self-discharging rate have been commercially available and widely used. Also, as an electrode for such high-capacity lithium secondary battery, research into a method for preparing an electrode having higher energy density per unit volume by improving electrode density has been actively conducted.

In general, a high-density electrode is formed by molding electrode active material particles having a size of a few µm to a few tens of µm through a high-pressure press, and in this case, the particles may be deformed and a space between the particles may be reduced during the molding process, facilitating degradation in electrolyte permeability.

In an effort to address such a limitation, a conductive material having excellent electrical conductivity and strength is being used during the preparation of the electrode. Since the conductive material is disposed between electrode active materials to maintain fine pores between the active material particles even over the molding process, an electrolyte may easily penetrate and excellent electrical conductivity may reduce resistance in the electrode. Among these conductive materials, the use of carbon nanotubes, as a fiber-type carbon-based conductive material capable of further reducing electrode resistance by forming an electrically conductive path in the electrode, is increasing.

Carbon nanotubes, as a kind of fine carbon fibers, are tube type carbon fibers having a diameter of 1 µm or less, and are expected to be used and practically applied in various fields due to high conductivity, tensile strength, and heat resistance obtained by their specific structure. However, the carbon nanotubes provide concerns over low dispersibility and agglomeration due to mutually strong van der Waals attraction, resulting from their high specific surface area.

To deal with this issue, a method of dispersing carbon nanotubes in a dispersion medium through a mechanical dispersion treatment, such as an ultrasonic treatment, has been suggested. However, with respect to the mechanical dispersion treatment method, the carbon nanotubes agglomerate upon completion of ultrasonic irradiation.

Thus, there is a need to develop a method for preparing a carbon nanotube dispersion exhibiting low viscosity, inhibiting an increase in viscosity over time, and providing improved dispersibility of carbon nanotubes.

### DISCLOSURE OF THE INVENTION

### TECHNICAL PROBLEM

The present invention is designed to overcome the limitations of the related art and thus an aspect of the present invention provides a carbon nanotube dispersion exhibiting excellent dispersibility, low viscosity, and little change in viscosity over time, including a compound containing an N atom and a compound containing a sulfonic group, a hydroxyl group, and an aromatic ring in a molecular structure at a certain weight ratio.

Another aspect of the present invention provides a negative electrode slurry composition for a lithium secondary battery including the carbon nanotube dispersion described above.

Another aspect of the present invention provides a method for preparing the carbon nanotube dispersion described above.

### TECHNICAL SOLUTION

To address the tasks described above, the present invention provides a carbon nanotube dispersion.
[1] According to an aspect of the present invention, there is provided a carbon nanotube dispersion including carbon nanotubes, a dispersant, and a dispersion medium, wherein the carbon nanotubes have a specific surface area (BET) of less than 800 m²/g, the dispersion contains a first dispersant and a second dispersant in a weight ratio of 100:10 to 90, the first dispersant is a compound containing an N atom, the second dispersant is a compound containing all of a sulfonic group, a hydroxyl group, and an aromatic ring, and the carbon nanotubes and the dispersant are present in a weight ratio of 100:25 to 500.
[2] The present invention provides the carbon nanotube dispersion according to [1] above, wherein the carbon nanotubes have a specific surface area (BET) of 200 m²/g to less than 800 m²/g.
[3] The present invention provides the carbon nanotube dispersion according to [1] or [2] above, wherein the carbon nanotubes are multi-walled carbon nanotubes.
[4] The present invention provides the carbon nanotube dispersion according to any one of [1] to [3] above, wherein the carbon nanotubes are present in an amount of 0.1 parts by weight to 7 parts by weight with respect to 100 parts by weight of the carbon nanotube dispersion.
[5] The present invention provides the carbon nanotube dispersion according to any one of [1] to [4] above, wherein the first dispersant is at least one selected from the group consisting of polyvinylpyrrolidone, polyacrylic acid hydrazide, poly-N-vinyl-5-methoxazolidon, N-alkyl polyimine, N-acetyl polyimine, polyacrylamide, poly-L-lysine hydrobromide, benzyl-dodecyl-dimethylammonium chloride, and polyethylenimine.
[6] The present invention provides the carbon nanotube dispersion according to any one of [1] to [5] above, wherein the second dispersant is a lignosulfonate compound.
[7] The present invention provides the carbon nanotube dispersion according to any one of [1] to [6] above, wherein the second dispersant is sodium lignosulfonate, calcium lignosulfonate, or a mixture thereof.
[8] The present invention provides the carbon nanotube dispersion according to any one of [1] to [7] above, wherein the dispersant contains the first dispersant and the second dispersant in a weight ratio of 100:15 to 75.
[9] The present invention provides the carbon nanotube dispersion according to any one of [1] to [8] above, wherein the carbon nanotubes and the dispersant are present in a weight ratio of 100:25 to 150.
[10] The present invention provides the carbon nanotube dispersion according to any one of [1] to [10] above, wherein the dispersion medium is at least one selected from the group consisting of an amide-based polar organic solvent, an alcohol-based solvent, a glycol-based solvent, a glycol ether-based solvent, a ketone-based solvent, an ester-based solvent, and an aqueous solvent.
[11] The present invention provides the carbon nanotube dispersion according to any one of [1] to [10] above, wherein the carbon nanotube dispersion has a viscosity of 10 to 1,000 cps.
   The present invention also provides an electrode slurry composition for a lithium secondary battery including the carbon nanotube dispersion described above.
[12] According to another aspect of the present invention, there is provided an electrode slurry composition for a lithium secondary battery including the carbon nanotube dispersion according to any one of [1] to [11] above and an electrode active material.
   The present invention also provides a method for preparing a carbon nanotube dispersion.
[13] According to another aspect of the present invention, there is provided a method for preparing the carbon nanotube dispersion according to any one of [1] to [11] above, the method including (1) mixing carbon nanotubes, a dispersant, and a dispersion medium to prepare a mixture; and (2) dispersing the mixture, wherein the dispersant contains a first dispersant and a second dispersant in a weight ratio of 100:10 to 90, the first dispersant is a compound containing an N atom, the second dispersant is a compound containing a sulfonic group, a hydroxyl group, and an aromatic ring in a molecular structure, and the carbon nanotubes and the dispersant are present in a weight ratio of 100:50 to 500.

### ADVANTAGEOUS EFFECTS

A carbon nanotube dispersion according to the present invention exhibits excellent dispersibility of carbon nanotubes, low viscosity, and little change in viscosity over time, including a dispersant containing an N atom and a compound containing a sulfonic group, a hydroxyl group, and an aromatic ring in a molecular structure, and thus is desirable for storage and use.

### MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. The singular forms are intended to include the plural forms as well, unless the context clearly indicates otherwise.

It will be further understood that the terms "include", "comprise", or "have" as used herein specify the presence of stated features, numbers, steps, elements, or combinations thereof, but do not preclude the presence or addition of one or more other features, numbers, steps, elements, or combinations thereof.

As used herein, "%" indicates wt% unless indicated otherwise.

As used herein, the term, average particle size "D₅₀" indicates a particle size at 50% of the volume accumulation, and "D₉₀" indicates a particle size at 90% of the volume accumulation. D₅₀ and D₉₀ above, for example, may be measured by using a laser diffraction method. The laser diffraction method generally allows the measurement of a particle size ranging from a submicron level to a few mm and may produce highly repeatable and high-resolution results.

As used herein, a "specific surface area" is measured through a BET method, and specifically may be calculated from an amount of nitrogen gas adsorbed at a liquid nitrogen temperature (77K) using BELSORP-mino II from BEL JAPAN, INC.

Hereinafter, the present invention will be described in detail.

A carbon nanotube dispersion according to the present invention is a carbon nanotube dispersion including carbon nanotubes, a dispersant, and a dispersion medium, wherein the carbon nanotubes have a specific surface area (BET) of less than 800 m²/g, the dispersion contains a first dispersant and a second dispersant in a weight ratio of 100:10 to 90, the first dispersant is a compound containing an N atom, the second dispersant is a compound containing all of a sulfonic group, a hydroxyl group, and an aromatic ring, and the carbon nanotubes and the dispersant are present in a weight ratio of 100:25 to 500.

### Carbon nanotube dispersion

A carbon nanotube dispersion according to the present invention is a carbon nanotube dispersion including carbon nanotubes, a dispersant, and a dispersion medium, wherein the carbon nanotubes have a specific surface area (BET) of less than 800 m²/g, the dispersion contains a first dispersant and a second dispersant in a weight ratio of 100:10 to 90, the first dispersant is a compound containing an N atom, the second dispersant is a compound containing all of a sulfonic group, a hydroxyl group, and an aromatic ring, and the carbon nanotubes and the dispersant are present in a weight ratio of 100:25 to 500.

Hereinafter, each component of the carbon nanotube dispersion according to the present invention will be described in detail.

### (1) Carbon nanotubes

The term "carbon nanotube" as used herein refers to a secondary structure formed by gathering carbon nanotube units such that the carbon nanotube units are fully or partially bundled, and the carbon nanotube units have graphite sheets in a cylinder form with nano-sized diameters and having a sp² bond structure. In this case, according to the rolling angle and structure of the graphite sheet, conductor or semiconductor properties may be shown. The carbon nanotube units may be divided into single-walled carbon nanotubes (SWCNTs), double-walled carbon nanotubes (DWCNTs), and multi-walled carbon nanotubes (MWCNTs), according to the number of bonds forming walls.

The term "bundle type" as used herein, unless otherwise referred to differently, refers to the arrangement of a plurality of carbon nanotube units such that the length directions of the axes of the units have substantially the same orientation, or a secondary shape in a bundle or rope type, in which the units are twisted or entangled after being arranged. A "non-bundle type or entangled type" refers to an entangled state without a certain shape such as the bundle type or rope type of the carbon nanotube units.

The carbon nanotube has high conductivity but has high cohesiveness due to van der Waals force generated between carbon nanotubes. When conductive materials are agglomerated, a conductive path may not be appropriately formed, and a relatively greater amount of conductive materials is required, and the amount of an active material decreases to rather degrade the performance of an electrode. Accordingly, there is difficulty in commercializing the carbon nanotube as a conductive material.

T h e carbon nanotube dispersion according to the present invention includes a compound containing an N atom as a dispersant and a compound containing a sulfonic group, a hydroxyl group, and an aromatic ring in a molecular structure, thereby exhibiting excellent dispersibility for carbon nanotubes, inhibiting changes in viscosity thereof over time to show a low viscosity increase rate, and being desirable for storage and use.

In addition, when the carbon nanotube dispersion according to the present invention is applied to the preparation of an electrode slurry, carbon nanotubes may be homogeneously positioned between active materials, and accordingly, minute spaces between electrode active materials may be maintained constant during the process of preparing an electrode by applying, drying, and pressing an electrode slurry. In addition, since the carbon nanotubes are uniformly distributed without agglomeration, a conductive path may be sufficiently formed with a small amount of carbon nanotubes.

The carbon nanotube dispersion according to an embodiment of the present invention may include at least one among single-walled, double-walled, and multi-walled carbon nanotube units as the carbon nanotube and may specifically include a single-walled carbon nanotube (SWCNT).

The carbon nanotube may have a specific surface area (BET) of less than 800 m²/g, specifically a specific surface area (BET) of 200 m²/g or greater, 220 m²/g or greater, 240 m²/g or greater, 260 m²/g or greater, 280 m²/g or greater, 290 m²/g or greater, 300 m²/g or greater, less than 800 m²/g, less than 780 m²/g, less than 760 m²/g, less than 740 m²/g, less than 720 m²/g, less than 700 m²/g, or less than 650 m²/g. The carbon nanotube dispersion according to the present invention includes a compound containing an N atom as a dispersant and a compound containing a sulfonic group, a hydroxyl group, and an aromatic ring in a molecular structure and thus exhibits excellent dispersibility, and accordingly exhibits excellent dispersibility for carbon nanotubes having a low specific surface area (BET) of less than 800 m²/g to show low viscosity and little change in viscosity over time.

The carbon nanotube may be included in an amount of 0.1 parts by weight to 7 parts by weight, specifically 0.5 parts by weight to 5 parts by weight, and more specifically 1 part by weight to 4 parts by weight, with respect to 100 parts by weight of the conductive material dispersion.

The carbon nanotube dispersion according to an embodiment of the present invention includes a dispersant having excellent dispersibility and thus exhibit excellent dispersibility even for carbon nanotubes having a high specific surface area, and accordingly, the carbon nanotubes having a high specific surface area may be uniformly dispersed. The carbon nanotube may be present in a greater amount when compared with typical, commonly used carbon nanotube dispersions in the above-described range. When a carbon nanotube dispersion having a smaller amount of carbon nanotubes is used for the preparation of an electrode slurry, the solid content of an electrode slurry thus prepared may decrease, a thickness (wet thickness) after applying the electrode slurry and prior to drying thereof may become large, and a rolling ratio measured after performing drying and rolling treatments may increase, and there may be a large difference of a thickness ratio before and after the drying and rolling. As described above, when the rolling ratio increases, the compositions in a slurry including a positive electrode active material may be damaged during processing, and accordingly, defects of degrading the performance of a battery may arise.

### (2) Dispersant

The carbon nanotube dispersion according to the present invention includes both a first dispersant and a second dispersant in a weight ratio of 100:10 to 90 to improve the dispersibility of the carbon nanotubes. In addition, the first dispersant is a compound containing an N atom, and the second dispersant is a compound containing a sulfonic group, a hydroxyl group, and an aromatic ring in a molecular structure.

A compound containing an N atom as the first dispersant, and a compound containing a sulfonic group, a hydroxyl group, and an aromatic ring in a molecular structure as the second dispersant serve to increase the dispersibility of carbon nanotubes in the carbon nanotube dispersion, as dispersants, and provide an effect of inhibiting an increase in viscosity of the carbon nanotube dispersion and changes in viscosity over time.

In particular, the carbon nanotube dispersion according to the present invention further includes the compound containing a sulfonic group, a hydroxyl group, and an aromatic ring in a molecular structure as the second dispersant, in addition to the compound containing an N atom as the first dispersant, and thus exhibit greater dispersibility than a carbon nanotube dispersion containing only one typical, commonly used dispersant, resulting in less particle agglomeration of a slurry composition, low sedimentation rate, and excellent adhesion with a separator substrate.

The second dispersant contains a sulfonic group, a hydroxyl group, and an aromatic ring altogether in a molecular structure, and thus may decrease the viscosity of a carbon nanotube dispersion, particularly, an aqueous carbon nanotube dispersion, and markedly mitigate the increase in viscosity over time, due to a bulky structure of the compound and sulfonic and hydroxyl groups, when compared to typical counterparts.

As the first dispersant, a compound containing an N atom may be used, and when a specific dispersant including the compound containing an N atom in a structure, such as an amine structure, an amide structure, an imine structure, and an ammonium structure, is applied as the first dispersant, a further enhanced viscosity improvement effect and an effect of inhibiting changes in viscosity over time may be provided. The dispersant containing an N atom may be soluble in water and may be, for example, at least one selected from the group consisting of polyvinylpyrrolidone, polyacrylic acid hydrazide, poly-N-vinyl-5-methoxazolidon, N-alkyl polyimine, N-acetyl polyimine, polyacrylamide, poly-L-lysine hydrobromide, benzyl-dodecyl-dimethylammonium chloride, and polyethylenimine.

In addition, a compound including a sulfonic group, a hydroxyl group, and an aromatic ring in a molecular structure may be used as the second dispersant, and the compound including a sulfonic group, a hydroxyl group, and an aromatic ring in a molecular structure may be, for example, a lignosulfonate compound. The second dispersant may specifically be sodium lignosulfonate, calcium lignosulfonate, or a mixture thereof.

When the dispersant includes a dispersant containing an N atom as the first dispersant and a compound containing a sulfonic group, a hydroxyl group, and an aromatic ring in a molecular structure as the second dispersant, interaction between the aromatic ring and the carbon nanotube and interaction due to hydrogen bond between the hydroxyl group and the polymer dispersant in the carbon nanotube dispersion may keep appropriate balance, and thus the effect of the viscosity decrease and inhibiting the viscosity increase over time with respect to the carbon nanotube dispersion may be provided. In addition, the negatively charged sulfonic group may induce an electrostatic shielding effect, thereby inhibiting agglomeration of carbon nanotubes.

The dispersant may contain both the first dispersant and the second dispersant in a weight ratio of 100:10 to 90, specifically in a weight ratio of 100:10 to 80, or in a weight ratio of 100:15 to 75, and more specifically in a weight ratio of 100:15 to 50. When the carbon nanotube dispersion contains the first dispersant and the second dispersant as the dispersant in the above weight ratio, the carbon nanotubes are uniformly dispersed in the carbon nanotube dispersion, thereby showing low viscosity and maintaining the viscosity to a certain degree over time.

The carbon nanotubes and the dispersant may be present in a weight ratio of 100:25 to 500, specifically 100:25 to 300, 100:25 to 250, 100:25 to 200, 100:25 to 180, 100:25 to 160, 100:25 to 150, 100:25 to 140, 100:25 to 120, 100:25 to 100, 100:25 to 90, 100:30 to 500, 100:30 to 300, 100:30 to 250, 100:30 to 200, 100:30 to 180, 100:30 to 160, 100:30 to 150, 100:30 to 140, 100:30 to 120, 100:30 to 100, or 100:30 to 90.

In addition, in an embodiment of the present invention, the carbon nanotubes and the dispersant may be more specifically present in a weight ratio of 100:30 to 90, 100:30 to 75, 100:30 to 60, or 100:30 to 45.

When the dispersant is included in an excessive amount beyond the above range, the conductivity of an electrode to which the carbon nanotube dispersion is applied may be degraded due to the excessive amount of the dispersant, and the dispersant may act as impurities in the electrode, and when the amount is less than the above range, the improving effect of dispersibility, the decreasing effect of viscosity, and the inhibiting effect of viscosity change over time may be insufficient.

### (3) Dispersion medium

The dispersion medium is a dispersion medium for dispersing the carbon nanotubes and the dispersant, and may be used for pre-dispersing carbon nanotubes first and supplying the pre-dispersed carbon nanotubes as a carbon nanotube dispersion to prevent the agglomeration when carbon nanotubes in a powder state are directly used for preparing an electrode slurry composition.

As the dispersion medium, a dispersion medium capable of dissolving or dispersing the carbon nanotubes and the dispersant to a certain degree or greater may be used. The dispersion medium may be included in an amount to provide an electrode slurry composition with an appropriate viscosity considering the coating properties of the electrode slurry composition which is prepared using the carbon nanotube dispersion later.

The dispersion medium serves to disperse the carbon nanotubes and the dispersant, and is not particularly limited as long as it is commonly used in the art, and may be, for example, at least one selected from the group consisting of an amide-based polar organic solvent, an alcohol-based solvent, a glycol-based solvent, a glycol ether-based solvent, a ketone-based solvent, an ester-based solvent, and an aqueous solvent.

The amide-based polar organic solvent may be at least one selected from the group consisting of dimethylformamide (DMF), diethylformamide, dimethyl acetamide (DMAc), N-methyl pyrrolidone (NMP), 3-methoxy-N,N-dimethylpropanamide (Equamide M100, Idemitsu Kosan Co., Ltd.), and 3-butoxy-N,N-dimethylpropanamide (Equamide B100, Idemisu Kosan Co., Ltd.).

The alcohol-based solvent may be at least one selected from the group consisting of methanol, ethanol, 1-propanol, 2-propanol (or isopropyl alcohol), 1-butanol, 2-methyl-1-propanol, 2-butanol, 1-methyl-2-propanol, pentanol, hexanol, heptanol, octanol, glycerin, trimethylolpropane, pentaerythritol, and sorbitol.

The glycol-based solvent may be at least one selected from the group consisting of ethylene glycol, diethylene glycol, triethylene glycol, propylene glycol, 1,3-propanediol, 1,3-butanediol, 1,5-pentanediol, and hexylene glycol.

The glycol ether-based solvent may be at least one selected from the group consisting of ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether.

The ketone-based solvent may be at least one selected from the group consisting of acetone, methyl ethyl ketone, methyl propyl ketone, and cyclopentanone.

The ester-based solvent may be at least one selected from the group consisting of ethyl acetate, gamma-butyrolactone, and epsilon-propiolactone.

In addition, the aqueous solvent may be water.

The carbon nanotube dispersion of the present invention, including such components, has excellent dispersibility, low viscosity, and a low level of viscosity increase over time.

The carbon nanotube dispersion may have a viscosity of 10 to 1,000 cps when measured at 25 °C and 1 rpm using a viscometer (viscometer TV-25, TOKI SANGYO) with Rotor 1, and specifically may have a viscosity of 20 cps or greater, 30 cps or greater, 40 cps or greater, 50 cps or greater, 60 cps or greater, 70 cps or greater, 1,000 cps or less, 800 cps or less, 600 cps or less, 500 cps or less, 400 cps or less, or 300 cps or less. When the carbon nanotube dispersion has a viscosity in the above range, an electrode slurry may be prepared more smoothly using the same, and an electrode slurry including the carbon nanotube dispersion may have an appropriate viscosity for forming an electrode.

In addition, the carbon nanotube dispersion may have a viscosity of 20 cps or greater, 30 cps or greater, 40 cps or greater, 50 cps or greater, 60 cps or greater, 70 cps or greater, 1,500 cps or less, 1,300 cps or less, 1,000 cps or less, 800 cps or less, 600 cps or less, 500 cps or less, or 400 cps or less, when measured at 25 °C and 1 rpm using a viscometer (viscometer TV-25, TOKI SANGYO) with Rotor 1 after 2 weeks from the preparation.

In addition, the carbon nanotube dispersion, when left standing for one week at 25 °C, may have a viscosity increasing rate of 50% or less, specifically 40% or less, 35% or less, 30% or less, 25% or less.

### Method for preparing carbon nanotube dispersion

Hereinafter, a method for preparing a carbon nanotube dispersion will be described. The method for preparing a conductive material dispersion according to the present invention includes (1) mixing carbon nanotubes, a dispersant, and a dispersion medium to prepare a mixture, and (2) dispersing the mixture, In this case, the dispersant contains a first dispersant and a second dispersant in a weight ratio of 100:10 to 90, the first dispersant is a compound containing an N atom, the second dispersant is a compound containing a sulfonic group, a hydroxyl group, and an aromatic ring in a molecular structure, and the carbon nanotubes and the dispersant are present in a weight ratio of 100:25 to 500.

In step (1), carbon nanotubes, a dispersant, and a dispersion medium are mixed to prepare a mixture.

The preparing of a mixture may be performed under temperature conditions in which physical properties including mixture viscosity are not affected by evaporation of the dispersion medium. For example, the step may be performed at a temperature of 50 °C or less, more specifically 5 °C to 50 °C.

In step (2), the mixture is dispersed to prepare a carbon nanotube dispersion.
the step may be performed through milling methods using ball mill, bead mill, disc mill, basket mill, or a high pressure homogenizer, and more particularly through milling methods using disc mill or a high pressure homogenizer.

During the milling using bead mill, the size of beads may be suitably determined according to the type and amount of carbon nanotubes and the type of dispersants, and particularly, the beads may have a diameter of 0.1 mm to 5 mm, more specifically 0.5 mm to 4 mm. In addition, the bead milling process may be performed in a rate of 1,000 rpm to 15,000 rpm, more specifically in a rate of 2,000 rpm to 12,000 rpm. The dispersing process may be performed according to the dispersion level of the carbon nanotube dispersion and may particularly be performed for 30 minutes to 120 minutes, more specifically 60 minutes to 90 minutes.

The milling using a high pressure homogenizer may be performed by pressurizing the mixture using, for example a plunger pump of the high pressure homogenizer and extruding the mixture through a gap of a valve for homogenization, and using the force of cavitation, shear, impact, and explosion upon passing through the gap. The pressure of the high pressure homogenizer may be 5,000 psi to 40,000 psi, specifically 10,000 psi to 30,000 psi, and more specifically 14,000 psi to 25,000 psi. The dispersion treatment through the high-pressure homogenizer may be performed 1 to 15 times, specifically 2 to 10 times, and more specifically 3 to 7 times.

### Electrode slurry composition

In addition, the present invention provides an electrode slurry composition for a lithium secondary battery, including the carbon nanotube dispersion and an electrode active material.

The electrode slurry composition for a lithium secondary battery may be a positive electrode slurry composition or a negative electrode slurry composition, specifically a negative electrode slurry composition.

The electrode slurry composition for a lithium secondary battery may include the carbon nanotube dispersion, a positive electrode active material or a negative electrode active material as an electrode active material, a binder, and a solvent and/or other additives, as necessary.

As the positive electrode active material, positive electrode active materials well known in the art may be used without limitation, and for example, lithium cobalt-based oxide, lithium nickel-based oxide, lithium manganese-based oxide, lithium iron phosphate, lithium nickel manganese cobalt-based oxide, or a combination thereof may be used. To be specific, as the positive electrode active material, LiCoO₂, LiNiO₂, LiMn₂O₄, LiCoPO₄, LiFePO₄, and LiNiₐMn_{b}Co_{c}O₂ (where, 0 <a, b, c <1), etc. may be used, but is not limited thereto.

The negative electrode active material may be, for example, at least one or at least two selected from the group consisting of natural graphite, artificial graphite, a carbonaceous material; lithium-containing titanium composite oxide (LTO), metals (Me) of Si, Sn, Li, Zn, Mg, Cd, Ce, Ni, or Fe; an alloy formed of the metals (Me); oxides (MeOₓ) formed of the metals (Me); and a composite of the metals (Me) and carbon. The negative electrode active material may be included in an amount of 60 wt% to 98 wt%, more preferably 70 wt% to 98 wt%, with respect to a total solid weight excluding a solvent from a negative electrode slurry.

The binder is a component that assists in binding between an active material and a conductive material and in binding with a current collector, and is generally added in an amount of 1 wt% to 30 wt% with respect to a total weight of a mixture containing an electrode active material. Examples of the binder may include polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, fluorine rubber, various copolymers, and the like.

As the solvent, organic solvents such as N-methyl pyrrolidone (NMP), dimethylformamide (DMF), acetone, and dimethylacetamide, or water may be used, and these solvents may be used alone or as a mixture of two or more. The amount of solvent used may be sufficient if the electrode active material, the binder, and the conductive material are dissolved and dispersed considering the application thickness of the slurry and production yield.

The viscosity regulator may be carboxymethylcellulose, polyacrylic acid, and the like, and due to the addition, the viscosity of the electrode slurry may be regulated to facilitate the preparation of the electrode slurry and the coating on the electrode current collector.

The filler may be selectively used as a component inhibiting the expansion of an electrode, and is not particularly limited as long as it is a fibrous material without causing chemical changes in a battery, and for example, olefin-based polymers such as polyethylene and polypropylene; fibrous materials such as glass fiber and carbon fiber may be used.

When the electrode slurry composition is a positive electrode slurry composition for forming a positive electrode, the positive electrode may be prepared by applying the positive electrode slurry composition onto a positive electrode current collector, and then drying and rolling. Alternatively, the positive electrode may be prepared by casting a separate support with the positive electrode slurry and then laminating the positive electrode current collector with a film separated from the support.

The thickness of the positive electrode active material layer formed by the positive electrode slurry may be changed according to a loading amount, a loading rate, and the like for applying the positive electrode slurry.

The positive electrode current collector generally has a thickness of 3 µm to 500 µm. The positive electrode current collector is not particularly limited as long as it is highly conductive without causing chemical changes in batteries. For example, stainless steel, aluminum, nickel, titanium, fired carbon, or aluminum or stainless steel that is surface-treated with one of carbon, nickel, titanium, silver, or the like may be used as the positive electrode current collector. In addition, the positive electrode current collector may have fine irregularities on a surface thereof to improve bonding strength of a positive electrode active material, and the positive electrode current collector may be used in various forms such as a film, a sheet, a foil, a net, a porous body, a foam body, and a non-woven fabric body.

When the electrode slurry composition is a negative electrode slurry composition for forming a negative electrode, the negative electrode may be formed by applying the negative electrode slurry composition onto a negative electrode current collector, and then drying and rolling. Alternatively, the negative electrode may be prepared by casting a separate support with the negative electrode slurry and then laminating the negative electrode current collector with a film separated from the support.

The thickness of the negative electrode active material layer formed by the negative electrode slurry may be changed according to a loading amount, a loading rate, and the like for applying the negative electrode slurry.

The negative electrode current collector generally has a thickness of 3 µm to 500 µm. The negative electrode current collector is not particularly limited as long as it has a high conductivity without causing chemical changes in batteries, and for example, copper, stainless steel, aluminum, nickel, titanium, fired carbon, copper or stainless steel which is surface-treated with carbon, nickel, titanium, silver, or the like, an aluminum-cadmium alloy, or the like may be used. In addition, as in the negative electrode current collector, fine irregularities may be formed on a surface to improve bonding strength of a negative electrode active material, and the negative electrode current collector may be used in various forms such as a film, a sheet, a foil, a net, a porous body, a foam body, and a non-woven fabric body.

### Lithium secondary battery

Lithium secondary batteries include a positive electrode, a negative electrode, a separator placed between the positive electrode and the negative electrode, and an electrolyte. The positive electrode and the negative electrode are the same as those described above, and thus a detailed description thereof will be skipped.

The separator separates the negative electrode and the positive electrode and provides a movement path of lithium ions, and any separator may be used as the separator without particular limitation as long as it is typically used in secondary batteries, and particularly, a separator having excellent moisture-retention of an electrolyte as well as low resistance to ion movement in the electrolyte is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous nonwoven fabric, for example, a nonwoven fabric formed of glass fiber having a high melting point or polyethylene terephthalate fiber may be used. Furthermore, a coated separator including a ceramic component or a polymer material may be used to secure heat resistance or mechanical strength, and a separator having a single-layer structure or a multi-layer structure may be optionally used.

As the electrolyte, an organic liquid electrolyte, an inorganic liquid electrolyte, a solid polymer electrolyte, a gel-type polymer electrolyte, an inorganic solid electrolyte, a molten-type inorganic electrolyte, or the like that is usable in the manufacture of a lithium secondary battery may be used without particular limitation. Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable. In this case, the electrolyte may exhibit excellent performance when the cyclic carbonate and the chain carbonate are mixed in a volume ratio of about 1:1 to about 1:9.

The lithium salt may be used without particular limitation as long as it is a compound capable of providing lithium ions used in lithium secondary batteries. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN (C₂F₅SO₃)₂, LiN (C₂F₅SO₂)₂, LiN (CF₃SO₂)₂. LiCl, LiI, LiB (C₂O₄)₂, or the like may be used. The lithium salt may be used in a concentration range of 0.1 M to 2.0 M. When the concentration of the lithium salt is included within the above range, the electrolyte has suitable conductivity and viscosity and may thus exhibit excellent performance, and lithium ions may effectively move.

In the electrolyte, in order to improve the lifespan properties of a battery, suppress the decrease in battery capacity, and improve the discharge capacity of the battery, one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included. In this case, the additive may be included in an amount of 0.1 wt% to 5 wt% with respect to a total weight of the electrolyte.

In a lithium secondary battery including an electrode prepared using the carbon nanotube dispersion according to the present invention, particularly, in a lithium secondary battery including a negative electrode prepared using the carbon nanotube dispersion, carbon nanotubes are uniformly dispersed in the negative electrode, and the amount of carbon nanotubes may be reduced when compared with a typical counterpart including a conductive material such as carbon black, and thus the lithium secondary battery may stably exhibit excellent discharge capacity and output characteristics. Accordingly, the lithium secondary battery according to the present invention may be usefully applied to portable devices such as a mobile phone, a laptop computer, and a digital camera, and to electric cars such as a hybrid electric vehicle (HEV).

Accordingly, according to another embodiment of the present invention, the lithium secondary battery, a battery module including the lithium secondary battery as a unit cell, and a battery pack including the same may be provided.

The battery module or the battery pack may be used as a power source of at least any one medium and large sized device of a power tool; electric cars including an electric vehicle (EV), a hybrid electric vehicle, and a plug-in hybrid electric vehicle (PHEV); or a power storage system.

Hereinafter, the present invention will be described in more detail with reference to Examples. However, the following Examples are for illustrative purposes only to describe the present invention and are not intended to limit the scope of the present invention.

### Example

### Example 1

0.72 wt% of polyvinylpyrrolidone (PVP K15, Zhangzhou Huafu Chemical), 0.18 wt% of sodium lignosulfonate (Borregaard), and water as a dispersion medium were mixed to prepare a 300 g mixture. An impeller and a vessel were installed in a dissolver (VMA-Getzmann, Dispermat-CA) and then rotated at 400 rpm for 10 minutes to mix the dispersants and the dispersion medium of the mixture.

3 wt% of multi-walled carbon nanotubes (MWCNT, BT2001M, LG Chemical) having a specific surface area of380 m²/g were added and dispersed at 10,000 rpm for 60 minutes.

The resultant was treated three times at 20,000 psi using a high-pressure disperser (PICOMAX, Micronox) to prepare a carbon nanotube dispersion.

### Examples 2 to 8

A carbon nanotube dispersion was prepared in the same manner as in Example 1, except that polyvinylpyrrolidone and sodium lignosulfonate were each used in varied amounts as shown in Table 1 below.

### Example 9

A carbon nanotube dispersion was prepared in the same manner as in Example 1, except that polyethyleneimine (Sigma-Aldrich) was used in an amount shown in Table 1 below, instead of polyvinylpyrrolidone.

### Examples 10 and 11

A carbon nanotube dispersion was prepared in the same manner as in Example 1, except that calcium lignosulfonate (Borregaard) was used in an amount shown in Table 1 below, instead of sodium lignosulfonate.

### Comparative Example 1

A carbon nanotube dispersion was prepared in the same manner as in Example 1, except that sodium lignosulfonate was not used and the content of polyvinylpyrrolidone was changed to 1.35%.

### Comparative Example 2

A carbon nanotube dispersion was prepared in the same manner as in Example 1, except that polyvinylpyrrolidone was not used and the content of sodium lignosulfonate was changed to 1.35%.

### Comparative Examples 3 to 7

A carbon nanotube dispersion was prepared in the same manner as in Example 1, except that polyphenol (Tannic acid, Sigma-Aldrich) was used in varied amounts as shown in Table 1 below, instead of sodium lignosulfonate.

### Comparative Examples 8 and 9

A carbon nanotube dispersion was prepared in the same manner as in Example 1, except that polyvinylpyrrolidone and sodium lignosulfonate were each used in varied amounts as shown in Table 1 below.

### Comparative Examples 10 and 11

A carbon nanotube dispersion was prepared in the same manner as in Example 1, except that polyethyleneimine and polyphenol were used as a first dispersant and as a second dispersant, respectively, in varied amounts as shown in Table 1 below.

### Comparative Examples 12 and 13

A carbon nanotube dispersion was prepared in the same manner as in Example 1, except that polyvinylpyrrolidone and sodium dodecylbenzenesulfonate (Sigma-Aldrich) were used as a first dispersant and as a second dispersant, respectively, in varied amounts as shown in Table 1 below.

### Comparative Example 14

A carbon nanotube dispersion was prepared in the same manner as in Example 1, except that polyvinylpyrrolidone and sodium lignosulfonate were each used in varied amounts as shown in Table 1 below.

**[Table 1]**

| | CNT Amount (wt%) | 1st dispersant (polymer) | | 2nd dispersant | | Ratio of dispersants | CNT to dispersant |
|---|---|---|---|---|---|---|---|
| | | Type | Input (wt%) | Type | Input (wt%) | | |
| Example 1 | 3 | PVP | 0.72 | Sodium lignosulfonate | 0.18 | 1:0.25 | 1:0.3 |
| Example 2 | 3 | PVP | 1.08 | Sodium lignosulfonate | 0.27 | 1:0.25 | 1: 0.45 |
| Example 3 | 3 | PVP | 1.44 | Sodium lignosulfonate | 0.36 | 1:0.25 | 1:0.6 |
| Example 4 | 3 | PVP | 1.8 | Sodium lignosulfonate | 0.45 | 1:0.25 | 1:0.75 |
| Example 5 | 3 | PVP | 2.16 | Sodium lignosulfonate | 0.54 | 1:0.25 | 1:0.9 |
| Example 6 | 3 | PVP | 0.9 | Sodium lignosulfonate | 0.45 | 1:0.5 | 1: 0.45 |
| Example 7 | 3 | PVP | 1.0125 | Sodium lignosulfonate | 0.3375 | 1:0.33 | 1: 0.45 |
| Example 8 | 3 | PVP | 1.125 | Sodium lignosulfonate | 0.225 | 1:0.17 | 1: 0.45 |
| Example 9 | 3 | PEI | 1.08 | Sodium lignosulfonate | 0.27 | 1:0.25 | 1: 0.45 |
| Example 10 | 3 | PVP | 1.08 | Calcium lignosulfonate | 0.27 | 1:0.25 | 1: 0.45 |
| Example 11 | 3 | PVP | 2.16 | Calcium lignosulfonate | 0.54 | 1:0.25 | 1:0.9 |
| Comparative Example 1 | 3 | PVP | 1.35 | - | - | - | 1: 0.45 |
| Comparative Example 2 | 3 | - | - | Sodium lignosulfonate | 1.35 | - | 1: 0.45 |
| Comparative Example 3 | 3 | PVP | 0.72 | Polyphenol | 0.18 | 1:0.25 | 1:0.3 |
| Comparative Example 4 | 3 | PVP | 1.08 | Polyphenol | 0.27 | 1:0.25 | 1: 0.45 |
| Comparative Example 5 | 3 | PVP | 1.44 | Polyphenol | 0.36 | 1:0.25 | 1:0.6 |
| Comparative Example 6 | 3 | PVP | 1.8 | Polyphenol | 0.45 | 1:0.25 | 1:0.75 |
| Comparative Example 7 | 3 | PVP | 2.16 | Polyphenol | 0.54 | 1:0.25 | 1:0.9 |
| Comparative Example 8 | 3 | PVP | 0.48 | Sodium lignosulfonate | 0.12 | 1:0.25 | 1:0.2 |
| Comparative Example 9 | 3 | PVP | 0.675 | Sodium lignosulfonate | 0.675 | 1:1 | 1: 0.45 |
| Comparative Example 10 | 3 | PEI | 1.08 | Polyphenol | 0.27 | 1:0.25 | 1: 0.45 |
| Comparative Example 11 | 3 | PEI | 2.16 | Polyphenol | 0.54 | 1:0.25 | 1:0.9 |
| Comparative Example 12 | 3 | PVP | 1.08 | Sodium dodecylbenzene sulfonate | 0.27 | 1:0.25 | 1: 0.45 |
| Comparative Example 13 | 3 | PVP | 2.16 | Sodium dodecylbenzene sulfonate | 0.54 | 1:0.25 | 1:0.0 |
| Comparative Example 14 | 3 | PVP | 1.29 | Sodium lignosulfonate | 0.06 | 1:0.05 | 1: 0.45 |

### Experimental Example

The initial viscosity of the carbon nanotube dispersions each prepared in Examples and Comparative Examples was measured after dispersion, and the viscosity was measured again after leaving the prepared dispersions at 25 °C for one week, and the results are shown in Table 2 below.

The viscosity was measured at 25 °C and 1 rpm using a viscometer (viscometer TV-25, TOKI) with Rotor 1.

**[Table 2]**

| | CNT content (wt%) | Viscosity (cps) | | | Ratio of dispersants | CNT to dispersant |
|---|---|---|---|---|---|---|
| | | Initial stage after dispersion | After 2 weeks | Increase rate (%) | | |
| Example 1 | 3 | 150 | 170 | 13 | 1:0.25 | 1:0.3 |
| Example 2 | 3 | 120 | 110 | -8 | 1:0.25 | 1:0.45 |
| Example 3 | 3 | 100 | 100 | 0 | 1:0.25 | 1:0.6 |
| Example 4 | 3 | 90 | 95 | 6 | 1:0.25 | 1:0.75 |
| Example 5 | 3 | 85 | 85 | 0 | 1:0.25 | 1:0.9 |
| Example 6 | 3 | 270 | 300 | 11 | 1:0.5 | 1:0.45 |
| Example 7 | 3 | 140 | 150 | 7 | 1:0.33 | 1:0.45 |
| Example 8 | 3 | 130 | 160 | 23 | 1:0.17 | 1:0.45 |
| Example 9 | 3 | 160 | 190 | 20 | 1:0.25 | 1:0.45 |
| Example 10 | 3 | 140 | 180 | 30 | 1:0.25 | 1:0.45 |
| Example 11 | 3 | 130 | 160 | 20 | 1:0.25 | 1:0.9 |
| Comparative Example 1 | 3 | 10,000 | 18,000 | 80 | - | 1:0.45 |
| Comparative Example 2 | 3 | 15,000 | 25,000 | 67 | - | 1:0.45 |
| Comparative Example 3 | 3 | 7,700 | 13,000 | 69 | 1:0.25 | 1:0.3 |
| Comparative Example 4 | 3 | 2,880 | 13,000 | 351 | 1:0.25 | 1:0.45 |
| Comparative Example 5 | 3 | 460 | 7,800 | 1,595 | 1:0.25 | 1:0.6 |
| Comparative Example 6 | 3 | 220 | 2,800 | 1,173 | 1:0.25 | 1:0.75 |
| Comparative Example 7 | 3 | 100 | 200 | 100 | 1:0.25 | 1:0.9 |
| Comparative Example 8 | 3 | 250 | 500 | 100 | 1:0.25 | 1:0.2 |
| Comparative Example 9 | 3 | 1,120 | 2,400 | 114 | 1:1 | 1:0.45 |
| Comparative Example 10 | 3 | 3,500 | 13,00 | 270 | 1:0.25 | 1:0.45 |
| Comparative Example 11 | 3 | 400 | 1200 | 300 | 1:0.25 | 1:0.9 |
| Comparative Example 12 | 3 | 360 | 1,500 | 320 | 1:0.25 | 1:0.45 |
| Comparative Example 13 | 3 | 250 | Phase separation observed | | 1:0.25 | 1:0.9 |
| Comparative Example 14 | 3 | 8,000 | 18,000 | 125 | 1:0.05 | 1:0.45 |

As determined in Table 2 above, the viscosity of the carbon nanotube dispersions of Examples 1 to 11 was maintained even after being left at 25°C for one week, and even when the viscosity increased, the carbon nanotube dispersions of Examples 1 to 11 showed only a very low rate of increase. Comparative Example 1 and Comparative Example 2 are a carbon nanotube dispersion using only PVP and a carbon nanotube dispersion using only sodium lignosulfonate, respectively, and had a high initial viscosity after dispersion due to low dispersibility and showed a significantly higher viscosity increase rate than Examples 1 to 8 even after two weeks.

In addition, Comparative Examples 3 to 7 are each ones in which a first dispersant and a second dispersant were used as in Examples, but as the second dispersant, polyphenol containing only a hydroxyl group and an aromatic ring was used instead of a compound containing all of a sulfonic group, a hydroxyl group, and an aromatic ring, and were able to reduce the initial viscosity after dispersion when the amount of dispersant used with respect to carbon nanotubes was increased but conversely, showed a rise in the rate of viscosity increase after two weeks, and when the amount of dispersant used with respect to carbon nanotubes was increased from 1:0.6 to 1:0.7 and 1:0.9, showed a decrease in the rate of viscosity increase after two weeks, but the viscosity increase rate was still significantly higher than that of Examples 1 to 8.

Comparative Example 8 is an example in which the amount of dispersant used with respect to carbon nanotubes was reduced, and showed low initial viscosity after dispersion but had a low viscosity increase rate after 2 weeks. Accordingly, it is determined that an appropriate amount of dispersant needs to be with respect to carbon nanotubes in order to inhibit the viscosity increase rate.

Comparative Example 9 is an example in which the first dispersant and the second dispersant were used in a weight ratio of 1:1, and showed a significant increase in initial viscosity after dispersion and viscosity increase rate after 2 weeks since the amount of the second dispersant used was relatively large. Comparative Example 14 is an example in which the first dispersant and the second dispersant were used in a weight ratio of 1:0.05 unlike Comparative Example 9, and showed very high initial viscosity and viscosity increase rate as well since the amount of the second dispersant used was relatively too small. Accordingly, it is determined that an appropriate content ratio needs to be satisfied when using the first dispersant and the second dispersant.

Comparative Examples 10 and 11 are examples in which polyethyleneimine, used in Examples of the present invention, was used as the first dispersant, but polyphenol without a sulfonic group was used as the second dispersant, and showed higher initial viscosity and significantly higher viscosity increase rate after two weeks than Examples. Comparative Examples 12 and 13 are also examples in which polyvinylpyrrolidone, used in Examples of the present invention, was used as the first dispersant, but sodium dodecylbenzenesulfonate without a hydroxyl group was used as the second dispersant, and also showed higher initial viscosity and significantly higher viscosity increase rate after two weeks than Examples, or showed phase separation. Accordingly, it is determined that the second dispersant used in combination with the first dispersant of the present invention needs to contain all of a sulfonic group, a hydroxyl group, and an aromatic ring in order to achieve the effect of reducing initial viscosity and the effect of improving viscosity stability.

## Claims

1. A carbon nanotube dispersion comprising carbon nanotubes, a dispersant, and a dispersion medium,
wherein the carbon nanotubes have a specific surface area (BET) of less than 800 m²/g,
the dispersion contains a first dispersant and a second dispersant in a weight ratio of 100:10 to 90,
the first dispersant is a compound containing an N atom, and the second dispersant is a compound containing all of a sulfonic group, a hydroxyl group, and an aromatic ring, and
the carbon nanotubes and the dispersant are present in a weight ratio of 100:25 to 500.

2. The carbon nanotube dispersion of claim 1, wherein the carbon nanotubes have a specific surface area (BET) of 200 m²/g to less than 800 m²/g.

3. The carbon nanotube dispersion of claim 1, wherein the carbon nanotubes are multi-walled carbon nanotubes.

4. The carbon nanotube dispersion of claim 1, wherein the carbon nanotubes are present in an amount of 0.1 parts by weight to 7 parts by weight with respect to 100 parts by weight of the carbon nanotube dispersion.

5. The carbon nanotube dispersion of claim 1, wherein the first dispersant is at least one selected from the group consisting of polyvinylpyrrolidone, polyacrylic acid hydrazide, poly-N-vinyl-5-methoxazolidon, N-alkyl polyimine, N-acetyl polyimine, polyacrylamide, poly-L-lysine hydrobromide, benzyl-dodecyl-dimethylammonium chloride, and polyethylenimine.

6. The carbon nanotube dispersion of claim 1, wherein the second dispersant is a lignosulfonate compound.

7. The carbon nanotube dispersion of claim 1, wherein the second dispersant is sodium lignosulfonate, calcium lignosulfonate, or a mixture thereof.

8. The carbon nanotube dispersion of claim 1, wherein the dispersant contains the first dispersant and the second dispersant in a weight ratio of 100:15 to 75.

9. The carbon nanotube dispersion of claim 1, wherein the carbon nanotubes and the dispersant are present in a weight ratio of 100:25 to 150.

10. The carbon nanotube dispersion of claim 1, wherein the dispersion medium is at least one selected from the group consisting of an amide-based polar organic solvent, an alcohol-based solvent, a glycol-based solvent, a glycol ether-based solvent, a ketone-based solvent, an ester-based solvent, and an aqueous solvent.

11. The carbon nanotube dispersion of claim 1, wherein the carbon nanotube dispersion has a viscosity of 10 to 1,000 cps.

12. An electrode slurry composition for a lithium secondary battery comprising the carbon nanotube dispersion according to claim 1 and an electrode active material.

13. A method for preparing the carbon nanotube dispersion according to claim 1, the method comprising:
(1) mixing carbon nanotubes, a dispersant, and a dispersion medium to prepare a mixture; and
(2) dispersing the mixture,
wherein the dispersant contains a first dispersant and a second dispersant in a weight ratio of 100:10 to 90,
the first dispersant is a compound containing an N atom, and the second dispersant is a compound containing a sulfonic group, a hydroxyl group, and an aromatic ring in a molecular structure, and
the carbon nanotubes and the dispersant are present in a weight ratio of 100:25 to 500.
